**Europäisches Patentamt**

**European Patent Office**

**Office européen des brevets**

(19)

(11) Veröffentlichungsnummer: **0 238 862**
**A1**

(12) **EUROPÄISCHE PATENTANMELDUNG**

(21) Anmeldenummer: 87102501.1

(51) Int. Cl.⁴: **G09B 23/28**

(22) Anmeldetag: 23.02.87

Die Bezeichnung der Erfindung wurde geändert (Richtlinien für die Prüfung im EPA, A-III, 7.3).

(30) Priorität: 07.03.86 DE 3607558

(43) Veröffentlichungstag der Anmeldung:
30.09.87 Patentblatt 87/40

(84) Benannte Vertragsstaaten:
DE FR GB IT NL SE

(71) Anmelder: **Siemens Aktiengesellschaft Berlin und München**
**Wittelsbacherplatz 2**
**D-8000 München 2(DE)**

(72) Erfinder: **Voll, Klaus**
**Waldstrasse 2**
**D-8521 Möhrendorf(DE)**
Erfinder: **Adolph, Michael, Dr.med.**
**Alter Postweg 20**
**D-8900 Augsburg(DE)**

(54) **Phantom für die Simulation von Sauerstoffverbrauch und Kohlendioxydproduktion.**

(57) Ein solches Phantom stellt ein Lungenmodell dar. Es dient dazu, einen Sauerstoff-Verbrauchsmeßplatz (72) auf seine Genauigkeit zu überprüfen und gegebenenfalls zu kalibrieren. Es umfaßt einen Behälter (2), in den eine Zuleitung (28) für ein brennbares Gas hineinführt. Innerhalb des Behälters (2) ist eine Verbrennungsstelle für das Gas vorgesehen, die als Bunsenbrenner (26) ausgebildet ist. Dessen Ansaugöffnung (34) liegt innerhalb des Behälters (2). Im Bereich der Mündung (35) des Bunsenbrenners (26) ist eine Einrichtung (36) zur elektrischen Zündung des austretenden Gasgemischs angeordnet. Der Behälter (2) ist weiterhin über eine Leitung (62) mit dem Meßplatz (72) verbindbar. Als Gas ist vorzugsweise Azetylen vorgesehen. Zündschwierigkeiten sind bei diesem Phantom weitgehend ausgeschlossen.

EP 0 238 862 A1

## Phantom für die Simulation von Sauerstoffverbrauch und CO₂-Produktion

Die Erfindung betrifft ein Phantom für die Simulation von Sauerstoffverbrauch und $CO_2$-Produktion mit einem abgeschlossenen, eine Compliance aufweisenden Behälter, in den eine Zuleitung für ein brennbares Medium hineinführt, mit einer Verbrennungsstelle für das Medium innerhalb des Behälters, und mit einer Kühleinrichtung zur Abfuhr der in der Flamme freigesetzten Verbrennungsenergie.

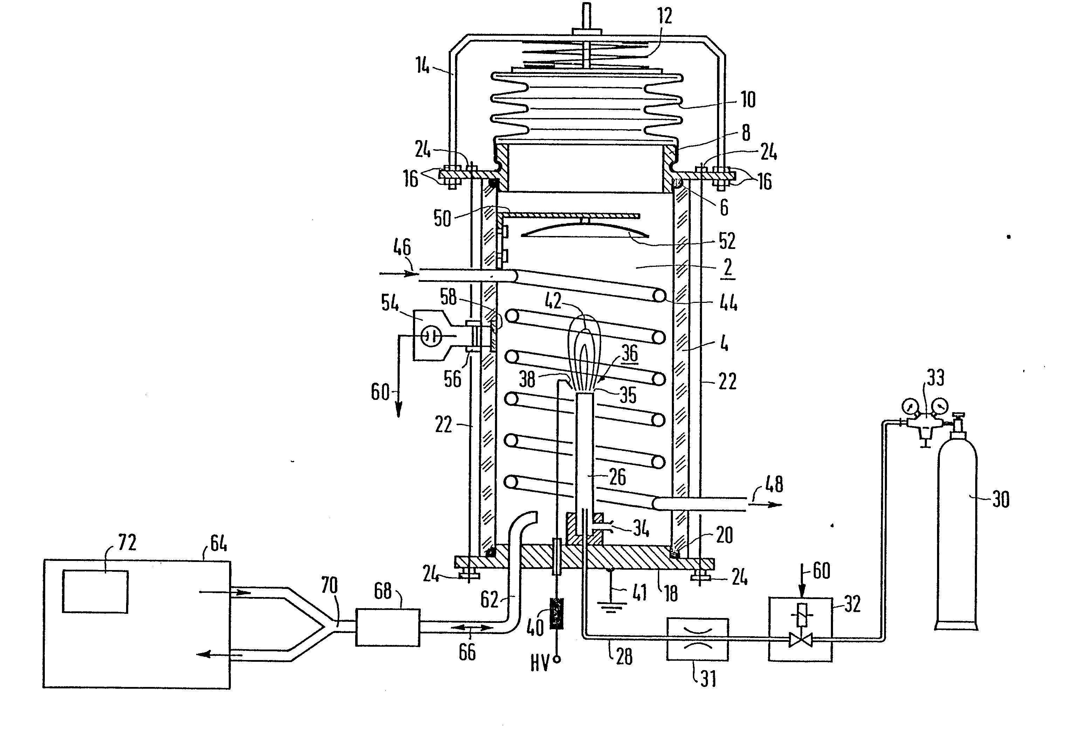

Ein solches Phantom ist beispielsweise aus der Vortragssammlung "Der Energiebedarf und seine Deckung", Workshop in Bernried am Starnberger See, 18. bis 20 Februar 1982, Seiten 1 bis 31, W. Zuckschwerdt-Verlag, München, insbesondere Abbildung 12 samt zugehöriger Beschreibung, und aus der Vortragssammlung "Notwendiges und nützliches Messen in Anästhesie und Intensivmedizin", Zweites Internationales Erlanger Anästhesie-Symposium, 24. bis 26. Mai 1984, Springer-Verlag, Berlin, Heidelberg, New York, Tokyo, Seiten 374 bis 387, insbesondere Abbildung 4 samt zugehöriger Beschreibung, bekannt.

Bei Sauerstoff-Verbrauchsmessplätzen besteht die Gefahr des Driftens der Meßwertaufnehmer. Aus diesem Grund ist man bestrebt, in bestimmten Intervallen die Meßapparatur mit geeigneten Eichmethoden zu überprüfen. Dazu wurde das obengenannte Phantom oder, anders ausgedrückt, der obengenannte Simulator geschaffen. Bei diesem Phantom ist man bestrebt, eine Prüfmöglichkeit zu schaffen, um den angeschlossenen Sauerstoff-Verbrauchsmeßplatz in einfacher Weise bezüglich der interessierenden Werte von Sauerstoffverbrauch, $CO_2$-Produktion und respiratorischem Quotienten RQ überprüfen zu können. Der Vorteil einer solchen Methode liegt darin, daß die genannten Parameter direkt simuliert werden, daß sich also nicht Fehler der einzelnen Parameter bei arithmetischen Operationen aufsummieren können.

Bei dem bekannten Phantom wird ein Metallzylinder verwendet, in den eine Zuleitung hineinführt, durch die eine Verbrennungsstelle mit einer brennbaren Flüssigkeit versorgt wird. In der Verbrennungsstelle innerhalb des gekühlten Metallzylinders wird die Flüssigkeit verbrannt, wobei sich ein vorgegebener respiratorischer Quotient RQ ergibt. Bei dem bekannten Phantom wird mit Äthanol gearbeitet, das nach der Stöchiometrie einen RQ-Wert von 0,66 ergibt.

Es hat sich bei praktischen Arbeiten mit Flüssigkeiten gezeigt, daß sich die Verbrennung bei Beginn einer Untersuchung nur sehr schlecht starten läßt. Man muß umständlich den zylindrischen Behälter öffnen und dann ein Streichholz an die Verbrennungsstelle für die Flüssigkeit halten.

Hierbei besteht eine gewisse Verpuffungsgefahr, weil sich häufig bereits eine explosive Atmosphäre gebildet hat. Darüber hinaus hat sich gezeigt, daß die Flamme während des Betriebs plötzlich ausgeht. Besonders nachteilig ist auch eine heftige Wasserbildung während des Verbrennungsvorganges im Behälter. Dieses Wasser führt zu Störungen der Flamme, setzt sich am Boden des Behälters ab und muß verhältnismäßig häufig aus dem Behälter entfernt werden.

Aufgabe der vorliegenden Erfindung ist es, ein Phantom der eingangs genannten Art so weiterzubilden, daß sich der Verbrennungsvorgang leicht und relativ gefahrlos starten läßt.

Diese Aufgabe wird erfindungsgemäß dadurch gelöst, daß als brennbares Medium ein Gas vorgesehen ist, das über die Zuleitung aus einem unter Überdruck stehenden Vorratsbehälter entnehmbar ist, daß die Verbrennungsstelle durch einen Bunsenbrenner gebildet ist, dessen Ansaugöffnung innerhalb des Behälters angeordnet ist, und daß im Bereich der Mündung des Bunsenbrenners eine Einrichtung zur elektrischen Zündung des austretenden Gasgemisches angeordnet ist.

Bei diesem Phantom wird also keine Flüssigkeit, sondern ein brennbares Gas verwendet. Ein solches Gas läßt sich auf elektrischem Wege verhältnismäßig einfach zünden. Damit entfallen die umständlichen und gelegentlich gefährlichen Arbeiten bei Beginn der Benutzung des Phantoms.

Eine bevorzugte Ausbildung des Phantoms zeichnet sich dadurch aus, daß als Gas Azetylen vorgesehen ist.

Diese Ausbildung hat den Vorteil, daß (bei vollständiger Verbrennung) die nachteilige Wasserbildung vermieden ist. Damit sind recht lange Überprüfungszeiten für den Sauerstoff-Verbrauchsmeßplatz erzielbar. Darüber hinaus liegt der RQ-Wert von Azetylen bei exakter Verbrennung bei RQ = 0,8. Dieses entspricht dem physiologischen Bereich des Menschen, so daß der Sauerstoff-Verbrauchsmeßplatz mittels dieses Phantoms in einem RQ-Bereich überprüft wird, in dem später auch tatsächlich am Menschen gemessen wird.

Die Einrichtung zur elektrischen Zündung kann als ein Heizdraht ausgebildet sein. Bevorzugt ist jedoch vor gesehen, daß sie eine Hochspannungszündeinrichtung ist, die bei Startbetätigung einen Zündfunken erzeugt.

Weitere vorteilhafte Ausgestaltungen der Erfindung ergeben sich aus den beigefügten Unteransprüchen und aus der Zeichnung. Die Zeichnung zeigt eine bevorzugte Ausführungsform eines Phantoms für die Simulation von Sauerstoffverbrauch und $CO_2$-Produktion.

Das in der Figur gezeigte Phantom simuliert die menschliche Lunge. Das heißt, es verbraucht Sauerstoff und produziert Kohlendioxid. Der Sauerstoffverbrauch und die $CO_2$-Produktion stehen in einem gewissen Verhältnis, die durch den RQ-Wert gekennzeichnet ist. Gleichzeitig stellt das Phantom auch einen Simulator bezüglich der Lungenmechanik dar.

Das Phantom umfaßt einen abgeschlossenen Behälter 2, der im wesentlichen durch einen Glaszylinder 4 gebildet ist. Dieser Glaszylinder 4 steht aufrecht. An seinem oberen Ende ist der Glaszylinder 4 mit einem O-Ring 6 und mit einem Flansch 8 versehen. Der Flansch 8 wiederum trägt ein elastisches Teil 10. Dieses Teil 10 ist insbesondere als Faltenbalg ausgebildet. Durch diesen Faltenbalg, der speziell aus Gummi bestehen kann, ist eine gewisse Lungen-Compliance nachgebildet. Am oberen Ende ist das Teil 10 über eine Spiralfeder 12 und einen Bügel 14 über den Außenrand des Flansches 8 mit dem Behälter 2 verbunden. Durch Auswechseln der Feder 12 kann eine geeignte Compliance gewählt und simuliert werden. Der Bügel 14 ist durch Befestigungsmittel 16, beispielsweise in Form von Schrauben, am Flansch 8 befestigt. Der untere Teil des Glaszylinders 4 ist durch einen Endflansch 18 verschlossen. Der Endflansch 18 ist dabei mittels eines O-Rings 20 luftdicht auf das Zylinderende aufgebracht. Zum Zusammenhalten der beiden Flansche 8, 18 dienen Spannschrauben 22, z. B. insgesamt eine Anzahl von vier, die symmetrisch um die Längsachse des Glaszylinders 4 herum verteilt angeordnet sind. Diese Spannschrauben 22 sind durch Muttern 24 oder andere Befestigungsmittel festgehalten.

Im Innenraum des Behälters 2 ist als Verbrennungsstelle ein selbst ansaugender Bunsenbrenner 26 angeordnet. Der Bunsenbrenner 26 wird aus einer Zuleitung 28 für ein brennbares Gas gespeist. Die Zuleitung 28 ist mit einem unter Überdruck stehenden Vorratsbehälter 30 (in Form einer Gasflasche) verbunden. In dieser Zuleitung 28 sind insbesondere ein Mengenmesser 31, ein Magnetventil 32 und - als Sicherheitsventil - ein Druckminderer 33 für das Gas angeordnet. Besonders hervorzuheben ist, daß die Ansaugöffnung 34 des Bunsenbrenners 26 innerhalb des Behälters 2 angeordnet ist. Diese räumliche Anordnung der Ansaugöffnung 34 ist notwendig, damit der zur Verbrennung notwendige Sauerstoff vom Innenraum des Behälters 2 zugeführt wird. Der Sauerstoff wird durch den Venturi-Effekt des in den Bunsenbrenner 26 einströmenden brennbaren Gases angesaugt.

Im unmittelbaren Bereich der Mündung 35 des Bunsenbrenners 26 ist eine Einrichtung 36 zur elektrischen Zündung des austretenden Gasgemischs angeordnet. Hierbei handelt es sich um einen Heizdraht, speziell aber um eine Hochspannungszündungs-Einrichtung. Diese umfaßt eine erste Elektrode 38 und eine Induktivität 40. Das auf Masse 41 gelegte Außenrohr des Bunsenbrenners 26 dient als zweite Elektrode. Zwischen dieser zweiten Elektrode und der ersten Elektrode 38 wird für eine gewisse Zeit eine Hochspannung HV angelegt. Beispielsweise kann zwischen diesen beiden Elektroden 38, 41 eine Hochspannung HV von 3 kV fünf Sekunden lang anliegen. Dadurch entsteht ein Zündfunke, der das aus der Mündung 35 austretende Gasgemisch zur Zündung bringt und die Flamme 42 startet.

Das in dem Vorratsbehälter 30 aufbewahrte Gas kann insbesondere Azetylen sein. Dieses besitzt bei vollständiger Verbrennung einen RQ-Wert, der bei RQ = 0,8 liegt und damit dem physiologischen Wert des Menschen (0,7 bis 1,0) entspricht.Bei der Verbrennung wird $O_2$ verbraucht und $CO_2$ erzeugt.

Im Innenraum des Behälters 2 ist eine Kühleinrichtung 44 zur Abfuhr der in der Flamme 42 freigesetzten Verbrennungsenergie angeordnet. Diese Kühleinrichtung 44 ist insbesondere als eine axial ausgerichtete, großflächig gewendelte Kühlschlange aus Kupferrohr oder einem anderen thermisch gut leitenden Material ausgebildet, die von Kühlwasser durchströmt ist. Die Durchströmungsrichtung ist durch Pfeile 46 für den Wasserzulauf bzw. 48 für den Wasserablauf gekennzeichnet. Oberhalb der Kühleinrichtung 44 und mit dieser über eine aufgesteckte Klammer 50 verbunden ist ein Wärmeschild 52 angebracht. Dieses Wärmeschild 52 dient zur Verteilung der in der Flamme 42 erzeugten Wärme und zum Schutz des Faltenbalges 10. Er kann als Flammenabweisdeckel angesehen werden.

Im Bereich der Mündung 35 des Bunsenbrenners 26 ist aus Sicherheitsgründen in der Wand des Glaszylinders 4 eine Überwachungseinrichtung 54 für die Flamme 42 angeordnet. Diese Überwachungseinrichtung 54 kann insbesondere als UV-Sonde ausgebildet sein. Sie ist durch einen Flansch 56 an der Wand des Glaszylinders 4 festgehalten. Im Bereich dieses Flansches 56 enthält der Glaszylinder 4 eine Öffnung, die durch ein UV-durchlässiges Fenster in Form einer Scheibe 58 verschlossen ist. Beispielsweise kann es sich dabei um eine Quarz-oder Saphierscheibe handeln. Die Überwachungseinrichtung 54 ist über eine Verbindungsleitung 60 mit einer Sicherheits-und/oder Alarmeinrichtung verbunden. Insbesondere kann das bei Ausfall der Flamme 42 erzeugte Ausgangssignal der Ein richtung 54 zum Abschalten des Magnetventils 32 und damit zur Unterbrechung des Gas-Flusses aus dem Vorratsbehälter 30 herangezogen werden. Dies ist durch die elektrische Leitung 60 am Magnetventil 34 angedeutet.

In den Endflansch 18 führt ein Rohr 62, worüber die Atmung simuliert wird, z. B. durch einen Respirator 64. Die Atmung ist durch einen Doppelpfeil 66 für Inspiration und Expiration angedeutet. Die Ventilation des Phantoms erfolgt also im unteren Bereich, da auch in diesem Bereich die Ansaugöffnung 34 des Bunsenbrenners 26 angeordnet ist. Zwischen dem Respirator 64 und dem Rohr 62 kann noch ein Servo-Befeuchter 68 angeordnet sein, der mit einem Y-Stück 70 mit einem Zweig für Inspiration und einem Zweig für Expiration verbunden ist. Der Sauerstoff-Verbrauchsmeßplatz kann entweder dem Respirator 64 zugeordnet sein, was durch einen Block 72 angedeutet ist; stattdessen kann er aber auch zwischen dem Y-Stück 70 und dem Servobefeuchter 68 angeordnet sein.

Die verwendeten elektrischen und pneumatischen Leitungen sind durch Quetschverbindungen gasdicht in das Innere des Behälters 2 eingeführt. Es können verschiedene Blindlöcher vorgesehen sein, um sonstige Gassonden etc. anzuordnen. Im (nicht gezeigten) Fußteil des Phantoms sind ein Hochspannungs-Transformator für die Hochspannungs-Zündeinrichtung 36, das Magnetventil 32 und eine Steuereinheit (nicht gezeigt) untergebracht.

Es ist zweckmäßig, zur Erzeugung isothermer Druckverhältnisse im Innenraum des Behälters 2 ein Material hoher Wärmeleitfähigkeit (nicht gezeigt) in Form einer Wolle unterzubringen. Das Material kann insbesondere Kupferwolle sein.

Zur Funktionsweise des Phantoms ist folgendes zu sagen: Durch einen Einschalter (nicht gezeigt) wird zunächst das Magnetventil 32 eingeschaltet und die Gaszufuhr in den Innenraum des Behälters 2 für das Azetylen freigegeben. Nach etwa zwei Sekunden wird über den Hochspannungs-Transformator der Zündfunke zwischen den Elektroden 36, 26 für die Dauer von etwa fünf Sekunden gestartet; damit wird die Flamme 42 erzeugt. Gleichzeitig wird über die Einrichtung 54, insbesondere eine UV-Sonde, die Flammenüberwachung aktiviert. Kommt keine Flamme 42 nach Betätigung des Einschalters zustande, weil z. B. die Gaszufuhr nicht korrekt oder unterbrochen ist, dann schaltet die (nicht gezeigte) Steuereinheit auf Störung. Das bedeutet, daß ein Warnsignal optischer oder akustischer Natur abgegeben wird. Kommt dagegen die Flamme 42 zustande und erlischt sie zu einem späteren Zeitpunkt, z. B. wegen Sauerstoffmangels im Behälter 2, dann wird über die Einrichtung 54 die Gaszufuhr durch das Magnetventil 32 abgeschaltet.

Ein besonderer Vorteil gegenüber der konventionellen Anwendung eines flüssigen Brennmediums ergibt sich durch den Einsatz des Mengenmessers 31 in der Zuleitung 28. Dieser Mengenmesser 31 kann als sogenanntes Flowmeter ausgebildet sein; der Mengenmesser 31 mißt dann den Flow, d. h. die Menge Gas pro Zeiteinheit, über einen vorgegebenen Zeitraum. Ist die Menge des zugeführten Gases (z. B. Azetylen) bekannt, dann läßt sich nach stöchiometrischen Bedingungen sowohl der $O_2$-Verbrauch als auch die $CO_2$-Produktion daraus berechnen. Neben der relativen Größe RQ sind also durch Verwendung des brennbaren Gases nunmehr auch die absoluten Größen $O_2$-Verbrauch und $CO_2$-Produktion meßbar und als Eichgrößen im Phantom verwendbar. Dabei muß hervorgehoben werden, daß anstelle des Mengenmessers 31 in der Zuleitung 28 auch eine Waage vorgesehen sein kann, mit der der Gas-Vorratsbehälter 30 ge wogen wird. Auch auf diese Weise läßt sich die verbrauchte Menge Gas messen und daraus auf den $O_2$-Verbrauch und/oder die $CO_2$-Produktion rückschließen. Auch unter Zuhilfenahme der Waage lassen sich also die genannten beiden zusätzlichen Eichgrößen bestimmen.

## Ansprüche

1. Phantom für die Simulation von Sauerstoffverbrauch und $CO_2$-Produktion mit einem abgeschlossenen, eine Compliance aufweisenden Behälter, in den eine Zuleitung für ein brennbares Medium hineinführt, mit einer Verbrennungsstelle für das Medium innerhalb des Behälters, und mit einer Kühleinrichtung zur Abfuhr der in der Flamme freigesetzten Verbrennungsenergie, **dadurch gekennzeichnet**, daß als brennbares Medium ein Gas vorgesehen ist, das über die Zuleitung (28) aus einem unter Überdruck stehenden Vorratsbehälter (30) entnehmbar ist, daß die Verbrennungsstelle durch einen Bunsenbrenner (26) gebildet ist, dessen Ansaugöffnung (34) innerhalb des Behälters (2) angeordnet ist, und daß im Bereich der Mündung (35) des Bunsenbrenners (26) eine Einrichtung (36) zur elektrischen Zündung des austretenden Gasgemischs angeordnet ist.

2. Phantom nach Anspruch 1, **dadurch gekennzeichnet**, daß als Gas Azetylen vorgesehen ist.

3. Phantom nach Anspruch 1 oder 2, **dadurch gekennzeichnet**, daß die Einrichtung (36) zur elektrischen Zündung eine Hochspannungszündeinrichtung ist, die bei Betätigung einen Zündfunken erzeugt.

4. Phantom nach einem der Ansprüche 1 bis 3, **dadurch gekennzeichnet**, daß im Bereich der Mündung (35) des Bunsenbrenners (26) eine Einrichtung (54) zur Überwachung der Flamme (42) angeordnet ist.

5. Phantom nach Anspruch 4, **dadurch gekennzeichnet**, daß die Einrichtung (54) zur Überwachung der Flamme (42) eine UV-Sonde ist.

6. Phantom nach Anspruch 4 oder 5, **dadurch gekennzeichnet**, daß der Ausgang der Einrichtung (54) zur Überwachung der Flamme (42) mit einer Einrichtung (32) zum Abschalten des Gasflusses aus dem Vorratsbehälter (30) verbunden ist.

7. Phantom nach einem der Ansprüche 1 bis 6, **dadurch gekennzeichnet**, daß der Behälter (2) zylinderförmig ausgebildet ist.

8. Phantom nach Anspruch 7, **dadurch gekennzeichnet**, daß die Compliance durch einen Faltenbalg (10) gebildet ist, der an einem Ende des zylinderförmigen Behälters (2) angeordnet ist.

9. Phantom nach einem der Ansprüche 1 bis 8, **dadurch gekennzeichnet**, daß die Kühleinrichtung (44) eine gewendelte Kühlschlange aus thermisch gut leitendem Material ist.

10. Phantom nach einem der Ansprüche 1 bis 9, **dadurch gekennzeichnet**, daß im Innenraum des Behälters (2) ein Material hoher Wärmeleitfähigkeit in Form einer Wolle untergebracht ist.

11. Phantom nach Anspruch 10, **dadurch gekennzeichnet**, daß das Material Kupferwolle ist.

12. Phantom nach einem der Ansprüche 1 bis 11, **dadurch gekennzeichnet**, daß der Behälter (2) aus Glas besteht.

13. Phantom nach einem der Ansprüche 1 bis 12, **dadurch gekennzeichnet**, daß in der Zuleitung (28) zwischen Vorratsbehälter (30) und Mündung (35) des Bunsenbrenners (26) ein Flowmesser (31) angeordnet ist.

14. Phantom nach einem der Ansprüche 1 bis 13, **dadurch gekennzeichnet**, daß oberhalb der Mündung (35) des Bunsenbrenners (26) ein Wärmeschild (52) zur homogenen Energieverteilung und Wärmeabschirmung angebracht ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-3 049 812 (BOVARD)<br><br>* Spalte 4, Zeilen 3-12; Figur *<br><br>--- | 1,2,6, 9,13 | G 09 B 23/28 |
| A | IBM TECHNICAL DISCLOSURE BULLETIN, Band 16, Nr. 1, Juni 1973, Seiten 322-323, New York, US; R.G. BARTLETT et al.: "Metabolic simulation combustion chamber"<br>* Insgesamt *<br><br>----- | 1,6,8, 13 | |

RECHERCHIERTE SACHGEBIETE (Int. Cl.4)

G 09 B

Der vorliegende Recherchenbericht wurde für alle Patentansprüche erstellt.

| Recherchenort | Abschlußdatum der Recherche | Prüfer |
|---|---|---|
| DEN HAAG | 15-06-1987 | MORVAN D.L.D. |